# EUROPÄISCHE PATENTSCHRIFT

(11) **EP 3 109 503 B1**
(45) Veröffentlichungstag und Bekanntmachung des Hinweises auf die Patenterteilung: **25.09.2019**
(21) Anmeldenummer: 16001027.8
(22) Anmeldetag: 06.05.2016
(51) Int. Cl.: F16F 9/46, F16F 9/19, B62D 33/06, F16F 9/06, F16F 9/096

(54) **DÄMPFUNGSSYSTEM**
DAMPING SYSTEM
SYSTEME D'AMORTISSEMENT

(30) Priorität: 02.06.2015 DE 102015007075
(43) Veröffentlichungstag der Anmeldung: 28.12.2016
(73) Patentinhaber: HYDAC Systems & Services GmbH, 66280 Sulzbach (DE)
(72) Erfinder: Huth, Heinz-Peter, 66802 Überherrn (DE)
(74) Vertreter: Bartels und Partner, Patentanwälte

(56) Entgegenhaltungen:
- WO-A1-2015/037497
- DE-A1-102010 051 872
- US-A- 4 936 423
- US-B1- 6 321 887

## Beschreibung

Die Erfindung betrifft ein Dämpfungssystem, insbesondere in Form einer hydraulischen Kabinenfederung, mit den Merkmalen im Oberbegriff von Anspruch 1.

Dahingehende Dämpfungs- oder Federungssysteme sind in einer Vielzahl von Ausführungsformen frei auf dem Markt erhältlich, wobei neben einer Kabinenfederung für Fahrzeuge auch sonstige hydraulisch ansteuerbare Betätigungsteile mit einer Dämpfung ausgelegt sein können, wie beispielsweise Hydromotoren für Fahrantriebe. Bei den bekannten Lösungen ist für den Erhalt einer gleichmäßigen oder konstanten Dämpfung ein hoher Regelungsaufwand notwendig, die unter Einsatz einer entsprechend ausgelegten Sensorik den hydraulischen Zustand des jeweils ansteuerbaren Betätigungsteils und/oder seiner Position erfasst.

Durch die EP 2 197 697 B1 ist ein gattungsgemäßes Dämpfungssystem bekannt mit dem eine variable, proportionale Dämpfung realisierbar ist, die situationsabhängig und anwenderspezifisch auf Ereignisse reagieren kann.

Durch den Einsatz eines Proportional-Drosselventils als Dämpfungsventil bei der bekannten Lösung besteht die Möglichkeit, mit nur einem Ansteuervorgang das jeweils hydraulisch ansteuerbare Betätigungsteil in Form eines Differentialzylinders variabel zu drosseln, ohne dass es dabei zu Hystereseerscheinungen beim eigentlichen Dämpfungsvorgang mit dem Differentialzylinder kommt, was die Ansteuerungsgenauigkeit beeinträchtigen könnte. Das bekannte Dämpfungssystem bedarf auch nur eines geringeren Regelungsaufwändes und lässt sich dergestalt kostengünstig realisieren und funktionssicher betreiben.

Bei einer bevorzugten Ausführungsform des bekannten Dämpfungssystems (siehe Fig. 5 und 6) arbeitet das Proportional-Drosselventil mit paarweise miteinander verschalteten Rückschlagventilen, insgesamt vier Stück, zusammen und über die Rückschlagventile kann die Ansteuerseite des Differentialzylinders der gerade nicht gedämpft wird, Fluid wie beispielsweise Öl aus dem Hydrospeicher aufnehmen, wodurch der Gefahr von Kavitation im angeschlossenen Hydraulikkreis begegnet ist.

Nachteilig an dieser an sich sonst ausgesprochen vorteilhaften Lösung der Schutzrechtsinhaberin ist, dass bei der Vier-Rückschlagventil-Lösung beim Einfahr- oder Einfederungsvorgang des Differentialzylinders (Druckstufe) ein sehr großer Volumenstrom aus dem Kolbenraum über das proportionale Dämpfungsventil in Form des Proportional-Drosselventils geleitet werden muss, was dazu führt, dass man ein entsprechend groß dimensioniertes Dämpfungsventil benötigt, um die anstehenden großen Fluidmengen sicher beherrschen zu können. Auch kommt es aufgrund der relativ großen anzusteuernden Fluidmengen zu einer verzögerten Dämpfungseinleitung, was ein rasches Ansprechen des Dämpfungssystems auf sich ändernde Druckverhältnisse am jeweiligen Differentialzylinder verhindert.

Die US 4 936 423, die DE 10 2010 051 872 A1, die US 6 321 887 B1 und die WO 2015/037497 A1 beschreiben jeweils ein gattungsgemäßes Dämpfungssystem mit mindestens einem hydraulisch ansteuerbaren, ein- und ausfedernden Differentialzylinder und mit mindestens einem an den zuordenbaren Differentialzylinder aufseiten seines Kolben- und seines Stangenraums angeschlossenen Hydrospeicher, wobei mittels eines Proportional-Drosselventils und einer Anzahl von Rückschlagventilen eine proportionale Dämpfung für den jeweiligen Differentialzylinder erreicht ist, wobei der Kolben- und der Stangenraum des Differentialzylinders mittels einer ersten Fluidleitung und zweier Rückschlagventile derart mit dem Hydrospeicher verbindbar sind, dass sowohl beim Ein- als auch beim Ausfedern ein Volumenstrom aus Kolben- oder Stangenraum über das Proportional-Drosselventil im Betrieb des Systems zum Hydrospeicher geführt ist, wobei der Kolben- und der Stangenraum des Differentialzylinders mittels der ersten Fluidleitung, in der ein erstes der Rückschlagventile angeordnet ist, direkt miteinander verbindbar sind.

Ein weiteres Dämpfungssystem geht aus der DE 200 03 155 U1 hervor.

Ausgehend von diesem Stand der Technik liegt der Erfindung die Aufgabe zugrunde, unter Beibehalten der Vorteile der bekannten gattungsgemäßen Lösung, wie der Funktionssicherheit und des kavitationsfreien Betriebes, diese dahingehend weiter zu verbessern, dass sie noch rascher auf sich ändernde Druckverhältnisse anspricht und in noch kostengünstigerer Weise realisierbar ist.

Eine dahingehende Aufgabe löst ein Dämpfungssystem mit den Merkmalen des Patentanspruches 1 in seiner Gesamtheit.

Gemäß dem Kennzeichen von Anspruch 1 ist vorgesehen, dass das Proportional-Drosselventil ein 2/2-Proportional-Drosselventil ist, das in einem unbetätigten Zustand von einer Rückstellfeder in einer den Fluidstrom drosselnden Ausgangsstellung gehalten ist und bei Betätigung mittels einer elektromagnetischen Stelleinrichtung zusehends in seine vollständig geöffnete Stellung gelangt.

Es ist ferner vorgesehen, dass der Kolben- und der Stangenraum des Differentialzylinders mittels der ersten Fluidleitung, in der ein erstes der Rückschlagventile angeordnet ist, direkt miteinander verbindbar sind. Auf diese Weise kann das Fluid zwischen dem Kolbenraum und dem Stangenraum auf kürzestem Wege und mit minimalem Widerstand fließen. Insbesondere ist es nicht erforderlich, hierfür einen Hydrospeicher oder eine Hydropumpe oder weitere Ventileinrichtungen vorzusehen. Das Rückschlagventil verhindert dabei vorteilhaft, dass das Dämpfungssystem unbeabsichtigt einfedern oder einsacken kann.

Dadurch, dass der Kolben- und der Stangenraum des Differentialzylinders mittels einer ersten Fluidleitung und zweier der Rückschlagventile derart miteinander verbindbar sind, dass sowohl beim Ein- als auch beim Ausfedern ein Volumenstrom aus Kolben- oder Stangenraum über das Proportional-Drosselventil im Betrieb des Systems zum Hydrospeicher geführt ist, sind nur relativ geringe Fluid-Volumenströme über das genannte Dämpfungsventil anzusteuern und mithin zu beherrschen, so dass man das Dämpfungsventil in Form des Proportional-Drosselventils von der Baugröße her deutlich kleiner dimensionieren kann, als das Dämpfungsventil nach der bekannten gattungsgemäßen Lösung, was Kosten einspart.

Darüber hinaus kommt das erfindungsgemäße Dämpfungssystem mit nur zwei Rückschlagventilen aus und benötigt keinesfalls vier, paarweise zusammenwirkende Rückschlagventile, was gleichfalls hilft, die Kosten zu senken. Aufgrund der geringeren Anzahl an benötigten Rückschlagventilen, sowie kleiner zu beherrschenden Fluidvolumina und kurzer Fluid-Leitungswege spricht das erfindungsgemäße Dämpfungssystem ausgesprochen schnell auf sich ändernde Ein- und Ausfederbewegungen am jeweiligen Differentialzylinder, beispielsweise im Rahmen eines Hubfahrwerksystems, an, so dass das Dämpfungs- und Federungsverhalten gegenüber bekannten Lösungen deutlich verbessert ist. Es ist für einen Durchschnittsfachmann auf dem Gebiet von Fahrwerksfederungen und -dämpfungssystemen überraschend, dass er bei geschickter Verschaltung der für ein Dämpfungssystem notwendigen Komponenten zu deutlich verbesserten Dämpfungsergebnissen kommt als mit den bekannten Lösungen.

Bei einer besonders bevorzugten Ausführungsform des erfindungsgemäßen Dämpfungssystems ist vorgesehen, dass man sowohl beim Ein- als auch beim Ausfedern mit dem Differentialzylinder über das Proportional-Drosselventil die gleiche Dämpfung erreicht, indem man die Ringfläche des Kolbens des Differentialzylinders doppelt so groß auslegt, wie die zugeordnete Stangenfläche des Kolbens. Dergestalt erhält man eine Dämpfungs-Symmetrie sowohl auf der Zug- als auch auf der Druckseite oder Druckstufe des Differentialzylinders.

Im Folgenden wird das erfindungsgemäße Dämpfungssystem anhand eines Ausführungsbeispieles nach der Zeichnung näher erläutert. Dabei zeigen in prinzipieller und nicht maßstäblicher Darstellung in der Art hydraulischer Schaltpläne:
- Fig. 1: das Dämpfungssystem bei einer Einfederbewegung mit dem Differentialzylinder; und
- Fig. 2: eine der Fig. 1 entsprechende Darstellung bei einer Ausfederbewegung des Differentialzylinders.

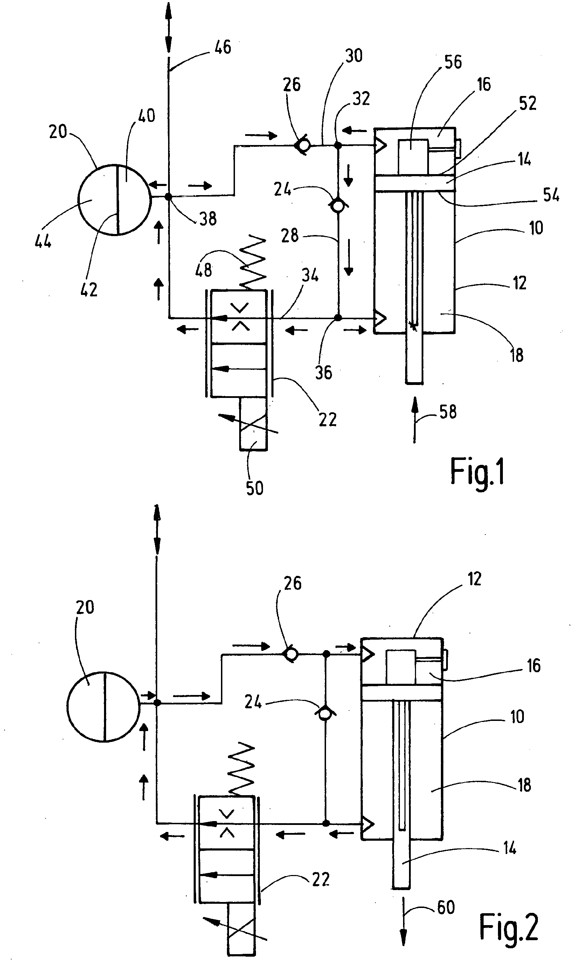

Das in den Fig. 1 und 2 gezeigte Dämpfungssystem in der Art eines hydraulischen Schaltplanes soll insbesondere die Funktion einer hydraulischen Kabinenfederung haben und weist mindestens einen hydraulisch ansteuerbaren, ein- und ausfedernden Differentialzylinder 10 auf. Der Differentialzylinder 10 verfügt über eine innerhalb eines Zylindergehäuses 12 längsverfahrbare Kolben-Stangeneinheit 14, wobei der dahingehende Aufbau für einen Differentialzylinder 10 üblich ist, so dass an dieser Stelle hierauf nicht näher eingegangen wird. Die angesprochene Kolben-Stangeneinheit 14 unterteilt innerhalb des Zylindergehäuses 12 den Differentialzylinder 10 in einen Kolbenraum 16 und einen Stangenraum 18. Je nach Verfahrstellung der Kolben-Stangeneinheit 14 nehmen die genannten Räume 16, 18 zueinander unterschiedliche Fluidvolumina ein. Um beispielsweise ein Fahrwerk aktiv zu dämpfen, kann die Kolbenstange der Kolben-Stangeneinheit 14 an ihrem, in Blickrichtung auf die Figuren 1 und 2 gesehen, unteren Ende ein nicht näher dargestelltes Rad oder einen Radsatz aufweisen.

Es ist ferner üblich, beispielsweise bei einem Fahrzeug mit zwei Achsen und vier Rädern für jedes Rad diesem einen eigenen Differentialzylinder 10 zur Verfügung zu stellen. Des Weiteren ist sowohl der Kolbenraum 16 als auch der Stangenraum 18 an einen Hydrospeicher 20 fluidführend angeschlossen. Ferner weist das Dämpfungssystem als Dämpfungsventil ein Proportional-Drosselventil 22 auf und ferner sind in die einzelnen Fluidleitungen zwei Rückschlagventile 24 und 26 geschaltet. Insbesondere sind der Kolbenraum 16 und der Stangenraum 18 des Differentialzylinders 10 mittels einer gemeinsamen ersten Fluidleitung 28 und der beiden genannten Rückschlagventile 24, 26 derart miteinander verbindbar, dass sowohl beim Ein- als auch beim Ausfedern nur das Differenzvolumen von Kolbenraum 16 und Stangenraum 18 des Differentialzylinders 10 herrührend über das Proportional-Drosselventil 22 im Betrieb des Systems geführt ist. Dies bedeutet, dass sowohl beim Einfedern als auch beim Ausfedern die Volumina zwischen Kolbenraum 16 und Stangenraum 18 unmittelbar und auf kürzestem Weg gegeneinander ausgetauscht werden, um dem Grunde nach nur das hierdurch sich ergebende geringe Differenzvolumen einschließlich des bewegten Fluidvolumens im, an den Differentialzylinder 10 angeschlossenen, hydraulischen Kreis zu dämpfen.

Das in der gemeinsamen ersten Fluidleitung 28 zwischen Kolbenraum 16 und Stangenraum 18 des Differentialzylinders 10 angeordnete erste Rückschlagventil 24 öffnet gemäß den Darstellungen nach den Fig. 1 und 2 in Richtung des Stangenraums 18 und sperrt in Richtung des Kolbenraums 16. In eine weitere zweite Fluidleitung 30, in die die erste Fluidleitung 28 über eine Abzweigstelle 32 in den Kolbenraum 16 einmündet, ist das weitere zweite Rückschlagventil 26 zwischen diese Abzweigstelle 32 und dem Hydrospeicher 20 geschaltet, das in Richtung dieser Abzweigstelle 32 öffnet und in Richtung des Hydrospeichers 20 schließt. In eine weitere dritte Fluidleitung 34, in die die erste Fluidleitung 28 über eine weitere zweite Abzweigstelle 36 in den Stangenraum 18 des Differentialzylinders 10 einmündet, ist das angesprochene Proportional-Drosselventil 22 als Dämpfungsventil zwischen dieser zweiten Abzweigstelle 36 und dem Hydrospeicher 20 geschaltet. Sowohl die zweite Fluidleitung 30 als auch die dritte Fluidleitung 34 treffen sich an einem gemeinsamen fluidführenden Knotenpunkt 38 an den der Hydrospeicher 20 mit seiner Fluidseite 40 angeschlossen ist. Die dahingehende Fluidseite 40 des Speichers 20 ist über ein elastisch nachgiebiges Trennelement 42 von der sogenannten Vorspann-Gasseite 44 separiert.

In Abhängigkeit der Form des Trennelements 42, sei es in Form einer Membran oder einer Blase, charakterisiert dies den Hydrospeicher 20 als Membran- bzw. Blasenspeicher. Das Trennelement 42 kann auch starr ausgebildet sein, beispielsweise in der Form eines Kolbens eines üblichen Kolbenspeichers. Ausgehend von dem Knotenpunkt 38 verläuft eine noch mit Doppelpfeilen endseitig gekennzeichnete Funktionsleitung 46, die dazu dienen kann, das Dämpfungssystem mit Fluid zu befüllen, beispielsweise in Form von Hydrauliköl oder die eine Anschlussmöglichkeit des gezeigten Dämpfungssystems an weitere Dämpfungssysteme (nicht dargestellt) ermöglicht, die eine Fahrwerksdämpfung oder Fahrwerksfederung sicherstellen.

Das genannte Proportional-Drosselventil ist ein 2/2-Proportional-Drosselventil 22, das in einem betätigten Zustand gemäß der Darstellung nach den Fig. 1 und 2 von einer Rückstellfeder 48 in einer den Fluidstrom drosselnden Ausgangsstellung gehalten ist und bei Betätigung mittels einer elektromagnetischen Stelleinrichtung 50 zusehends in seine vollständig geöffnete Stellung gelangt. Anstelle der in den Figuren gezeigten Drossel lässt sich die Drosselfunktion auch über ein federbelastetes Rückschlagventil an der Stelle der Drossel im Ventil 22 erreichen, dessen Öffnungsrichtung in Richtung des Stangenraumes 18 weist. Bei der gezeigten Ausführungsform des Differentialzylinders 10 ist die Ringfläche 52 der Kolben-Stangeneinheit 14 doppelt so groß dimensioniert wie die Stangenfläche 54, die am Kolben der Kolben-Stangeneinheit 14 der Ringfläche 52 stirnseitig gegenüberliegt. Bei der dahingehenden Ausgestaltung ist sowohl beim Ein- als auch beim Ausfedern über das Proportional-Drosselventil 22 die gleiche Dämpfung erreicht.

Ferner weist der Differentialzylinder 10 in üblicher, und daher nicht näher beschriebener Weise, ein Wegmesssystem 56 auf, das vorzugsweise teilweise in den Differentialzylinder 10 in seinem Kolbenraum 16 integriert ist sowie zumindest teilweise in die Kolbenstange des Differentialzylinders 10 eingesetzt ist. Das dahingehende Messsystem 56 erlaubt eine elektrische oder elektronische Messwerterfassung der Position der Kolben-Stangeneinheit 14 gegenüber dem insoweit ruhenden Zylindergehäuse 12, wobei die erfassten Messwerte an eine nicht näher dargestellte zentrale Steuereinheit (CPU) weitergeleitet werden, die wiederum nach vorgebbaren Regelalgorithmen die elektromagnetische Stelleinrichtung 50 des Proportional-Drosselventils 22 für einen Dämpfungsvorgang mit dem Differentialzylinder 10 ansteuert. Es ist selbstredend, dass auch eine Relativbewegung zwischen Zylindergehäuse 12 und Kolben-Stangeneinheit 14 stattfinden kann.

Die Darstellung nach der Fig. 1 zeigt das Strömungsverhalten der Dämpfungsflüssigkeit, wie Öl, im Hydraulikkreis des Dämpfungssystems, insbesondere bestehend aus den Fluidleitungen 28, 30 und 34 sowie den Rückschlagventilen 24, 26, dem Proportional-Drosselventil 22 nebst Hydrospeicher 20 und aus dem an den hydraulischen Kreis angeschlossenen Differentialzylinder 10. Die Fig. 1 gibt die Fluidströmung anhand von Pfeilen bei einer Einfederbewegung des Dämpfungssystems wieder, was durch einen Pfeil 58 symbolisiert ist, der die Krafteinleitung von der Umgebung, beispielsweise über den nicht näher dargestellten Radsatz, auf die Kolben-Stangeneinheit 14 des Dämpfungszylinders 10 wiedergibt. Dahingehend wird gemäß den weiteren Pfeildarstellungen innerhalb des hydraulischen Kreises aus dem Kolbenraum 16 Fluid zur ersten Abzweigstelle 32 verdrängt, wobei das erste Rückschlagventil 24 druckbedingt öffnet und das zweite Rückschlagventil 26 in seiner geschlossenen Stellung verbleibt.

Über die gemeinsame erste Fluidleitung 28 gelangt dergestalt das im Kolbenraum 16 verdrängte Fluid über die zweite Abzweigstelle 36 in die dritte Fluidleitung 34 und somit in den Stangenraum 18, wobei das im Kolbenraum 16 verdrängte Fluidvolumen im Stangenraum 18 unmittelbar aufgenommen wird, der sich vom Aufnahmevolumen her dann entsprechend vergrößert, da die Kolben-Stangeneinheit 14 bedingt durch die eingeleitete Kraft gemäß Kraftpfeil 58 nach oben in Richtung des Kolbenraumes 16 verschoben wird, der sich dabei in seinem Volumen verringert. Durch diesen internen, direkten Volumenausgleich zwischen Kolbenraum 16 und Stangenraum 18 unter Einbezug der gemeinsamen ersten Fluidleitung 28 zwischen diesen Räumen 16, 18 und dem Rückschlagventil 24, braucht dann nur noch das verbleibende Differenzvolumen innerhalb des beschriebenen hydraulischen Dämpfungs-Systemkreislaufes von dem Proportional-Drosselventil 22 gedämpft zu werden, um dergestalt ein gesamtwirksames Dämpfungssystem für den Differentialzylinder 10 zu erreichen. Dies hat so keine Entsprechung im Stand der Technik.

Zur Dämpfung des Fluidkreises dient auch der Hydrospeicher 20 mit seiner über die Gasseite 44 vorgespannten Fluidmenge auf seiner Fluid- oder Flüssigkeitsseite 40. Etwaig von der Fluid- oder Flüssigkeitsseite 40 stammendes bevorratetes Fluid des Hydrospeichers 20 sowie das das Proportional-Drosselventil 22 passierende Fluid gelangt im Sinne eines geschlossenen Kreislaufes dann über den Knotenpunkt 38 wiederum in die zweite Fluidleitung 30 und dann bei geöffnetem zweiten Rückschlagventil 26 zur ersten Abzweigstelle 32 und dergestalt in die gemeinsame erste Fluidleitung 28 zwischen Kolbenraum 16 und dem Stangenraum 18.

Im umgekehrten Fall, also beim Ausfedern der Kolben-Stangeneinheit 14 aus dem Zylindergehäuse 12 des Differentialzylinders 10, was in der Fig. 2 mit einem weiteren Kraftpfeil 60 angedeutet ist, erfolgt der Ausgleich nunmehr zwischen dem Stangenraum 18 und dem Kolbenraum 16 bei geschlossenem ersten Rückschlagventil 24 über die Fluidleitungen 34 und 30 bei geöffnetem zweiten Rückschlagventil 26. Die Androsselung des dahingehenden Fluidstroms erfolgt dann wiederum über das Proportional-Drosselventil 22 unter Einbezug des Dämpfungsverhaltens des angeschlossenen Hydrospeichers 20. Auch insoweit wird das bei dem Einfederungsvorgang nach der Fig. 1 verbleibende Differenzvolumen im hydraulischen Dämpfungs-Fluidkreis gedämpft.

Über die spezielle Anordnung der Rückschlagventile 24, 26 erfolgt die proportionale Dämpfung über das aufgezeigte, konstruktiv einfach aufgebaute 2/2-Proportional-Drosselventil 22, so dass unabhängig von der Bewegungsrichtung der Kolben-Stangeneinheit 14 relativ zum Zylindergehäuse 12 des jeweiligen Differentialzylinders 10 immer ein Volumenstrom über das Ventil 22 zum Speicher 20 erzeugt wird. Aufgrund der angesprochenen Zylinderauslegung bei der die Ringfläche 52 der Kolben-Stangeneinheit 14 doppelt so groß ist wie die Stangenfläche 54, ergibt sich eine vollständige Symmetrie zwischen Zug- und Druckstufe am Differentialzylinder 10. Da nur kleine Differenzvolumen bewegt und gedämpft werden müssen und der Hauptstrom-Volumenausgleich direkt zwischen Kolbenraum 16 und Stangenraum 18 des Differentialzylinders 10 erfolgt, erfolgt die Dämpfung sehr rasch und verzögerungsfrei und das Proportional-Drosselventil 22 kann entsprechend klein dimensioniert werden, was Kosten sparen hilft.

## Patentansprüche

1. Dämpfungssystem, insbesondere in Form einer hydraulischen Kabinenfederung, mit mindestens einem hydraulisch ansteuerbaren, ein- und ausfedernden Differentialzylinder (10) und mit mindestens einem an den zuordenbaren Differentialzylinder (10) aufseiten seines Kolben- (16) und seines Stangenraums (18) angeschlossenen Hydrospeicher (20), wobei mittels eines Proportional-Drosselventils (22) und einer Anzahl von Rückschlagventilen (24, 26) eine proportionale Dämpfung für den jeweiligen Differentialzylinder (10) erreicht ist, wobei der Kolben- (16) und der Stangenraum (18) des Differentialzylinders mittels einer ersten Fluidleitung (28) und zweier Rückschlagventile (24, 26) derart mit dem Hydrospeicher verbindbar sind, dass sowohl beim Ein- als auch beim Ausfedern ein Volumenstrom aus Kolben- (16) oder Stangenraum (18) über das Proportional-Drosselventil (22) im Betrieb des Systems zum Hydrospeicher (20) geführt ist, wobei der Kolben- (16) und der Stangenraum (18) des Differentialzylinders mittels der ersten Fluidleitung (28), in der ein erstes der Rückschlagventile (24) angeordnet ist, direkt miteinander verbindbar sind, **dadurch gekennzeichnet, dass** das Proportional-Drosselventil (22) ein 2/2-Proportional-Drosselventil ist, das in einem unbetätigten Zustand von einer Rückstellfeder (48) in einer den Fluidstrom drosselnden Ausgangsstellung gehalten ist und bei Betätigung mittels einer elektromagnetischen Stelleinrichtung (50) zusehends in seine vollständig geöffnete Stellung gelangt.

2. Dämpfungssystem nach Anspruch 1, **dadurch gekennzeichnet, dass** das Rückschlagventil (24) in der ersten Fluidleitung (28) zwischen Kolben- (16) und Stangenraum (18) des Differentialzylinders (10) in Richtung des Stangenraums (18) öffnet und in Richtung des Kolbenraums (16) sperrt.

3. Dämpfungssystem nach Anspruch 1 oder 2, **dadurch gekennzeichnet, dass** in eine zweite Fluidleitung (30), in die die erste Fluidleitung (28) über eine erste Abzweigstelle (32) in den Kolbenraum mündet, ein weiteres zweites der Rückschlagventile (26) zwischen die erste Abzweigstelle (32) und den Hydrospeicher (20) geschaltet ist, das in Richtung der ersten Abzweigstelle (32) öffnet.

4. Dämpfungssystem nach einem der vorstehenden Ansprüche, **dadurch gekennzeichnet, dass** in eine dritte Fluidleitung (34), in die die erste Fluidleitung (28) über eine zweite Abzweigstelle (36) in den Stangenraum (18) mündet, das Proportional-Drosselventil (22) zwischen die zweite Abzweigstelle (36) und den Hydrospeicher (20) geschaltet ist.

5. Dämpfungssystem nach einem der vorstehenden Ansprüche, **dadurch gekennzeichnet, dass** bei doppelt so großer Ringfläche (52) wie der Stangenfläche (54) des Kolbens des Differentialzylinders (10), sowohl beim Ein- als auch beim Ausfedern über das Proportional-Drosselventil (22) die gleiche Dämpfung erreicht ist.

6. Dämpfungssystem nach einem der vorstehenden Ansprüche, **dadurch gekennzeichnet, dass** der Hydrospeicher (20) ein Membran-, Blasen- oder Kolbenspeicher ist, dessen jeweiliges Trennelement (42) in Form einer Membran, einer Blase oder eines Kolbens die Flüssigkeitsseite (40) von einer Vorspann-Gasseite (44) des Hydrospeichers (20) trennt.

7. Dämpfungssystem nach einem der vorstehenden Ansprüche, **dadurch gekennzeichnet, dass** der Differentialzylinder (10) ein Weg-Messsystem (56) aufweist, das vorzugsweise teilweise in dem Differentialzylinder (10) in seinem Kolbenraum (16) integriert ist und zumindest teilweise die Kolbenstange des Differentialzylinders (10) durchgreift.

## Claims

1. Damping system, in particular in the form of a hydraulic cab suspension, with at least one hydraulically controllable, retracting and extending differential cylinder (10) and with at least one hydraulic accumulator (20) linked to the assignable differential cylinder(10) on the part of its piston (16) and its rod chambers (18), whereby, by means of a proportional throttle valve (22) and a number of check valves (24, 26), a proportional damping is achieved for the respective differential cylinder(10), wherein the piston (16) and the rod chambers (18) of the differential cylinder can be connected by means of a first fluid line (28) and two check valves (24, 26) to the hydraulic accumulator so that, both during retraction and extension, a volume flow takes place from piston (16) or rod chamber (18) via the proportional throttle valve (22) to the hydraulic accumulator (20) during operation of the system, wherein the piston (16) and rod (18) chambers of the differential cylinder can be directly connected together by means of the first fluid line (28), in which a first of the check valves (24) is located **characterised in that** the proportional throttle valve (22) is a 2/2 proportional throttle valve which, in an unactuated state, is retained by a return spring (48) in an initial position throttling the fluid stream and on actuation is moved increasingly by an electromagnetic positioning device (50) into its fully opened position.

2. Damping system in accordance with claim 1, **characterised in that** the check valve (24), in the first fluid line (28) between piston- (16) and rod chamber (18) of the differential cylinder (10), opens in the direction of the rod chamber (18) and blocks in the direction of the piston chamber (16).

3. Damping system in accordance with claim 1 or 2, **characterised in that** in a second fluid line (30), into which the first fluid line (28) opens into the piston chamber via a first branch-off point (32), a further second of the check valves (26) is connected between the first branch-off point (32) and the hydraulic accumulator (20), opening in the direction of the first branch-off point (32).

4. Damping system in accordance with one of the preceding claims, **characterised in that** in a third fluid line (34), into which the first fluid line (28) opens into the rod chamber (18) via a second branch-off point (36), the proportional throttle valve (22) is connected between the second branch-off point (36) and the hydraulic accumulator (20).

5. Damping system in accordance with one of the preceding claims, **characterised in that**, with a ring surface (52) twice as large as the rod surface (54) of the piston of the differential cylinder (10), the same degree of damping is achieved both during retraction and extension by means of the proportional throttle valve (22).

6. Damping system in accordance with one of the preceding claims, **characterised in that** the hydraulic accumulator (20) is a membrane, bladder or piston accumulator, whose respective partitioning element (42), in the form of a diaphragm, a bladder or a piston separates the liquid side (40) from a preloaded gas side (44) of the hydraulic accumulator (20).

7. Damping system in accordance with one of the preceding claims, **characterised in that** the differential cylinder (10) has a displacement measuring system (56), which is preferably partially integrated in the differential cylinder (10) in its piston chamber (16) and at least partially passes through the piston rod of the differential cylinder (10).

## Revendications

1. Système d'amortissement, notamment sous la forme d'une suspension hydraulique de cabine, comprenant au moins un vérin (10) différentiel qui peut être commandé hydrauliquement, à compression et décompression et par au moins un accumulateur (20) hydraulique raccordé au vérin (10) différentiel pouvant être associé, du côté de son espace (16) de piston et de son espace (18) de tige, au moyen d'une soupape (22) d'étranglement proportionnelle et d'un certain nombre de clapets anti-retour (24, 26), il est obtenu un amortissement proportionnel du vérin (10) différentiel, l'espace (16) de piston et l'espace (18) de tige du vérin différentiel pouvant communiquer avec l'accumulateur hydraulique au moyen d'un premier conduit (28) pour du fluide et de deuxièmes clapets anti-retour (24, 26), de manière à ce que, à la fois lors de la compression et de la décompression, un courant en volume soit, en fonctionnement du système, envoyé à l'accumulateur (20) à partir de l'espace (16) de piston ou de l'espace (18) de tige par la soupape (22) d'étranglement proportionnelle, l'espace (16) de piston et l'espace (18) de tige du vérin différentiel pouvant, au moyen du premier conduit (28) pour du fluide dans lequel est monté un premier des clapets anti-retour (24), communiquer entre eux directement, **caractérisé en ce que** la soupape (22) d'étranglement est une soupape d'étranglement proportionnelle 2/2 qui, dans un état non actionné, est maintenue par un ressort (48) de rappel, dans une position initiale étranglant le courant de fluide et qui, lorsqu'elle actionnée au moyen d'un dispositif (50) électromagnétique de réglage, parvient à vue d'oeil dans sa position ouverte complètement.

2. Système d'amortissement suivant la revendication 1, **caractérisé en ce que** le clapet anti-retour (24) entre l'espace (16) du piston et l'espace (18) de la tige du vérin (10) différentiel ouvre en direction de l'espace (18) de la tige et ferme en direction de l'espace (16) du piston.

3. Système d'amortissement suivant la revendication 1 ou 2, **caractérisé en ce que**, dans un deuxième conduit (30) pour du fluide, dans lequel le premier conduit (28) pour du fluide débouche par un premier point (32) de dérivation dans l'espace du piston, est monté, entre le premier point (32) de dérivation et l'accumulateur (20) hydraulique, un autre deuxième des clapets anti-retour (26), qui ouvre dans la direction du premier point (32) de dérivation.

4. Système d'amortissement suivant l'une des revendications précédentes, **caractérisé en ce que**, dans un troisième conduit (34) pour du fluide, dans lequel le premier conduit (28) pour du fluide débouche dans l'espace (18) de tige par un deuxième point (36) de dérivation, la soupape (22) d'étranglement proportionnelle est montée entre le deuxième point (36) de dérivation et l'accumulateur (20) hydraulique.

5. Système d'amortissement suivant l'une des revendications précédentes, **caractérisé en ce que**, par une surface (52) annulaire deux fois plus grande que la surface (54) de tige du piston du vérin (10) différentiel, il est obtenu, tant à la compression qu'à la décompression, le même amortissement par la soupape (22) d'étranglement proportionnelle.

6. Système d'amortissement suivant l'une des revendications précédentes, **caractérisé en ce que** l'accumulateur (20) hydraulique est un accumulateur à membrane à bulle ou à piston, dont l'élément (42) de séparation, sous la forme d'une membrane, d'une bulle ou d'un piston, sépare le côté (40) de liquide d'un côté (44) de gaz précontraint de l'accumulateur (20) hydraulique.

7. Système d'amortissement suivant l'une des revendications précédentes, **caractérisé en ce que** le vérin (10) différentiel a un système (56) de mesure de trajet qui est intégré, de préférence en partie, dans le vérin (10) différentiel dans son espace (16) de piston et qui traverse au moins en partie la tige de piston du vérin (10) différentiel.
